# EUROPÄISCHE PATENTSCHRIFT

(11) **EP 0 928 679 B1**
(45) Veröffentlichungstag und Bekanntmachung des Hinweises auf die Patenterteilung: **27.08.2003**
(21) Anmeldenummer: 98124005.4
(22) Anmeldetag: 17.12.1998
(51) Int. Cl.: B29D 30/06, B29D 30/54

(54) **Verfahren zur Herstellung von Luftreifen**
Process for manufacturing pneumatic tyres
Procédé de fabrication de pneus

(30) Priorität: 07.01.1998 DE 19800289
(43) Veröffentlichungstag der Anmeldung: 14.07.1999
(73) Patentinhaber: Continental Aktiengesellschaft, 30165 Hannover (DE)
(72) Erfinder: Peter, Julius, Dr., 1130 Wien (AT); Kleinbrod, Martin, 2511 Pfaffstätten (AT); Steiner, Anton, 2531 Gaaden (AT)

(56) Entgegenhaltungen:
- EP-A- 0 054 533
- EP-A- 0 875 363
- GB-A- 1 202 702
- US-A- 5 183 640

## Beschreibung

Die Erfindung betrifft ein Verfahren zur Herstellung von Luftreifen, welche im wesentlichen Karkasskörper, Seitenwände, Verstärkungselemente, mit Wulstkernen versehene Reifenwülste und einen Laufstreifen aufweisen, bei dem ein bereits vulkanisierter und mindestens die Gürtellagen enthaltender Karkasskörper vorgewärmt, mit unvulkanisierten Kautschukmischungen für den Laufstreifen und / oder die Seitenwand- oder Schulterbereiche belegt, und anschließend vulkanisiert wird.

Ebenfalls betrifft die Erfindung ein Verfahren zur Runderneuerung von Reifen sowie die Verwendung des Verfahrens zur Herstellung von in zwei voneinander getrennten Verfahrensteilen A und B hergestellten Neureifen.

Bei der üblichen Herstellung von Neureifen wird auf eine Aufbautrommel zuerst die Innenplatte eines Reifens und anschließend eine Karkassenlage aufgebracht. Bei anschließend expandierter Aufbautrommel werden die Wulstkerne samt Apex gesetzt. Es folgt der Hochschlagvorgang, indem die Karkassenlagenenden um die Wulstkerne gefaltet werden. Dieser Vorgang wird mit Hilfe von Bälgen durchgeführt. Anschließend werden eine weitere Karkassenlage - falls eine zweite Lage vorgesehen ist -, die Seitenstreifen (Seitenwandteile) und die Hornprofile angebracht. Die Reifenkarkasse bzw. der Karkasskörper ist nun bis auf Bombierung und Vulkanisation fertiggestellt und kann von der Aufbautrommel, die wieder in ihre ursprüngliche Lage gebracht wird, entfernt werden.

Der weitere Aufbau zum fertigen Rohreifen beginnt mit dem Transfer der Reifenkarkasse zu einer zweiten Aufbautrommel, die einen Bombierteil umfaßt. Auf einer gesonderten Gürteltrommel werden die Gürtellagen, im allgemeinen sind dies zwei oder drei gummierte Stahlkordlagen, aufgebracht und ggf. mit einer oder zwei Lagen einer Nylonbandage versehen. Zwischen einzelnen Gürtellagen können Gürtellpufferstreifen angeordnet werden. Auf diesen Gürtelverband wird schließlich noch der ggf. mit einer Unterplatte versehene Laufstreifen aufgebracht. Eine einen Tragering für den Gürtellaufstreifenverband umfassende Transfereinrichtung transportiert den Gürtellaufstreifenverband zur Reifenkarkasse und positioniert diesen über der Reifenkarkasse. Diese ist bereits zentriert und vorbombiert und wird nun vollends bombiert, mit dem Gürtellaufflächenpaket zusammengefügt, wobei nach dem Entfernen der Transfereinrichtung der Laufstreifen mitsamt dem Gürtelpaket angerollt wird.

Bei dem beschriebenen Verfahren handelt es sich um den sogenannten Zweistufenaufbau. Es ist auch üblich, ein Einstufenverfahren einzusetzen, bei dem die Karkassenherstellung und die Fertigstellung des Rohreifens auf einer einzigen Trommel erfolgt.

Der fertiggestellte Rohreifen wird in einer entsprechenden Vulkanisationsform ausvulkanisiert und erhält somit seine endgültige Gestalt mit eingeformtem Laufstreifenprofil und beschrifteten bzw. auch dekorativ gestalteten Seitenwänden.

Bei der Vulkanisation werden die Reifenrohlinge in einer Reifenvulkanisierpresse unter Verwendung eines im Inneren des Reifenrohlings angeordneten Heizbalges vulkanisiert. Der Heizbalg steht hierbei unter Innendruck, wodurch der Rohling noch einmal bombiert wird und seine "Resterhebung" erhält. Das für den Laufstreifen vorgesehene und zu vulkanisierende Material des Rohlings wird dabei in die umgebende Form, d. h. in die profilgebende Matrize gedrückt.

Eine solche Vulkanisation erfolgt heute üblicherweise nach dem Steam-Inertgas-Verfahren, bei dem nach dem Schließen der Vulkanisierpresse der zunächst "eingefaltete" Heizbalg durch einen überhitzten Dampf gefüllt und zur Anlage an die Innenseite der Karkasse gebracht wird, wonach der Reifenrohling mit einem Arbeitsdruck von ca. 20 bar unter Innendruck gesetzt wird.

Nachteiligerweise muß die Energie zur Wärmung und zur Anfangsvernetzung über den Dampf und den Heizbalg und somit abhängig vom Wärmedurchgangskoeffizienten des Heizbalgmateriales und vom Wärmeübergangskoeffizienten (Innenseite / Außenseite - Heizbalg; Reifenrohling) eingebracht und weiter durch die anschließenden Gummivolumina geleitet werden, so daß mit zunehmender Zeit die Erwärmung nach außen hin fortschreiten kann. Gleichzeitig erfolgt auf der Außenseite des Rohlings durch die geheizten Matrizen-Segmente eine solche Temperaturführung, daß auch auf und ausgehend von der Außenseite des Reifenrohlings eine zunehmende Vernetzung und Vulkanisation erfolgt.

Die hierdurch erforderliche Vulkanisationszeit bis zur Druckentlastung im Heizbalg, zum Öffnen der Presse und zum Ausstoßen des Reifenrohlings ist somit durch die zu überwindenden Widerstände beim Wärmedurchgang und Wärmeübergang unerwünscht lang und die eingebrachten Energiemengen relativ hoch.

Etwas reduziert werden diese Nachteile bei Herstellungsverfahren, bei denen die Karkasse mit den ihr zugehörigen Teilen und der Laufstreifen separat hergestellt und zum Teil auch bereits einzeln vulkanisiert werden. So zeigt die DE-PS 14 80 936 einen Reifen, bei dem ein vulkanisierter Laufring mit gürtelartiger Verstärkung mit einem unvulkanisierten bzw. lediglich vorvulkanisierten Reifenkörper bzw. einer Reifenkarkasse vereinigt wird, worauf danach der Gesamtreifen ausvulkanisiert wird. Durch die Vulkanisierung des Laufstreifens ist zwar die bei der abschließenden Vulkanisation beider Teile erforderliche Wärmeenergie und damit auch die Vulkanisationszeit bis zur ausreichenden Vernetzung geringer, jedoch zeigt es sich bei diesem Verfahren als nachteilig, daß zur Verbindung der Karkasse und des Laufstreifens in aller Regel eine weitere Schicht eingelegt werden muß, die die Haftung der einzelnen Teile untereinander sichert.

Die DE-OS 27 44 391 beschreibt ein Verfahren zur Runderneuerung von Reifen, bei der ein bereits vulkanisierter Laufstreifen auf eine Altkarkasse aufgebracht wird. Zur Verbesserung der Haftung zwischen beiden Teilen wird eine Gummizwischenschicht eingelegt, die einen im Vergleich zu der Lauffläche hohen dielektrischen Verlust aufweist. Die Karkasse wird dann von der Innenseite her mit einem Heizbalg gewärmt, während von der Außenseite eine Mikrowellenstrahlung auf den so zusammengestellten Reifen wirkt, wobei durch den unterschiedlichen dielektrischen Verlustfaktor der Zwischenschicht die Mikrowellenenergie in diesem Bereich stärker absorbiert werden soll, als im Laufstreifen selbst. Hierdurch soll ein örtlich definiertes und schnelles Einbringen von Wärmeenergie ohne Verluste durch Übertragung und Leitung und ohne Zeitverlust bei der Vulkanisation erreicht werden, wie auch eine gezielte Ausvulkanisierung der Zwischenschicht und eine gute Haftung des Laufstreifens. Nachteilig bei diesem Verfahren ist der relativ hohe Produktionsaufwand sowie die Möglichkeit einer Überhitzung der Grenzflächen der bereits vorgewärmten vulkanisierten Karkasse, wodurch die Haftung an der Karkasse nachteilig beeinflußt werden kann. Bei einer solchen Verfahrensweise können zudem auch die Probleme entstehen, die den bekannten Vorwärmverfahren zugrunde liegen, bei denen die Vorwärmung von allen Seiten der Karkasse, also auch von außen erfolgt. Diese zeigen sich im wesentlichen durch eine Schädigung der Rauhnabe durch Oberflächenoxydation oder durch eine Verschlechterung der Bindung des Laufstreifens während der Vulkanisation durch vorzeitige Anvulkanisationserscheinungen der Mischungen, insbesondere an den für Haftung zwischen Altgummi und Frischgummi entscheidenden Grenzflächen.

Für die Erfindung bestand nun die Aufgabe, einerseits die Heiz- und Haltezeit bei der Vulkanisation in merkbarem Maße zu verkürzen und die hierfür nötige einzubringende Wärmeenergie zu reduzieren, andererseits die Haftungsprobleme im Grenzschichtbereich bei der Verwendung von separat hergestellten Karkassen und/oder Laufstreifen zu vermeiden und im übrigen ein Verfahren anzugeben, bei dem der herkömmliche Herstellungsprozeß mindestens im Hinblick auf Vulkanisationsverfahren und Einrichtungen im wesentlichen erhalten bleiben kann und bei dem eine für alle Abmessungen ohne großen Vorrat von Spezialwerkzeugen oder apparativen Aufwand durchführbare Produktionsweise zugrunde gelegt wird, und welches im übrigen kostengünstig und materialsparend für alle Abmessungsbereiche und Reifentypen nutzbar wird.

Gelöst wird diese Aufgabe durch die Merkmale des Hauptanspruchs. Weitere vorteilhafte Ausgestaltungen sind in den Unteransprüchen beschrieben.

Unter Nutzung eines vorgefertigten, bombierten und bereits vulkanisierten Karkasskörpers, der im wesentlichen bereits seine Endkontur besitzt; erfolgt hierbei in einem ersten Schritt die Vorwärmung des mit unvulkanisierten Kautschukmischungen belegten vulkanisierten Karkasskörpers ohne Formgebung und von der Innenseite des Karkasskörpers her so, daß die Grenzfläche zwischen Karkasskörper und aufgelegten Kautschukmischungen bis auf eine Temperatur erwärmt wird, bei der die unvulkanisierte Kautschukmischung noch nicht vulkanisationsaktiv wird, und danach in einem zweiten Schritt der vorgewärmte Karkasskörper mit den aufgelegten Kautschukmischungen in eine das Außenprofil und gegebenenfalls die Seitenwände des Reifens formende Vulkanisationsform eingebracht, ausgeformt und vulkanisiert wird.

Der besondere Vorteil dieses Verfahrens liegt zum einen darin, daß zur Erwärmung einer vulkanisierten und in ihrer Kontur bereits im wesentlichen fertiggestellten Karkasse kein Heizbalg mehr benötigt wird, so daß Zeit- und Energieverluste für u. a. die Erwärmung einer bis zu 4 mm starken Balgwand aus Butylgummi nicht mehr auftreten. Zum anderen kann sowohl eine Oberflächenoxydation der einzelnen Reifenbestandteile als auch die Gefahr der vorzeitigen Anvulkanisation der Frischmischung an der heißen Karkasse vermieden und trotzdem die Vulkanisationszeit signifikant verringert werden.

Vorteilhafterweise erfolgt die Vorwärmung mit Dampf einer Temperatur von 100°C bis 170°C, wobei insbesondere bei der Nutzung von Sattdampf die Temperatur exakt einstellbar ist. Prinzipiell kann auch überhitzter Dampf eingesetzt weren, wobei jedoch der Regelaufwand für den Erhalt von geeigneten Drücken und Temperaturen wesentlich höher ist.

Die bei der Herstellung von Neureifen angewandte Temperatur von 150°C bis 170°C erlaubt dann einen raschen Wärmedurchgang und das Erreichen der notwendigen Temperatur in der Grenzschicht zwischen Karkasse und Laufstreifen, bei der eine Vulkanisationsaktivität des unvulkanisierten Laufstreifens gerade noch nicht einsetzt. Durch den Verzicht auf den Balg bei der Vorwärmung des Karkasskörpers und durch das mit direkte Beaufschlagen mit dem Wärmeübertragungsmedium kann man auf die mit einem Balg zusammenhängende recht umfangreiche Handhabungsmechanik zur Einlage in den und Entnahme aus dem Karkasskörper ebenfalls verzichten.

Vorteilhafterweise werden die unvulkanisierten Kautschukmischungen für den Laufstreifen entgast, so daß zum einen die Prozeßführung im Hinblick auf die erreichbare Anfangsvernetzung gesichert wird und zum anderen eine wesentliche Reduktion der Vulkanisationszeit und damit eine deutlich frühere Entformbarkeit erreicht wird. Da entgaste Mischungen weniger zur Fehlstellenbildung durch Blasen (Porositäten) neigen, sind die Kohäsionskräfte in der Gummimatrix nämlich bereits zu wesentlich früheren Zeitpunkten ausreichend zur Durchführung der Entformung, wobei eine Restvulkanisation nachträglich ablaufen kann.

Vorteilhafte Möglichkeiten zur Entgasung der für das erfindungsgemäße Verfahren verwandten unvulkanisierten Kautschukmischungen ergeben sich bei der Mischungsherstellung in einem unterfüllten stempellosen Kneter bei einer Temperatur von 100°C bis 150°C. Eine unter diesen Bedingungen durchgeführte Entgasung ist in aller Regel für die Prozeßführung während der Reifenherstellung ausreichend und kann abhängig von den eingesetzten Gummimischungen noch verbessert werden, wenn die Entgasung unter Anwendung eines Vakuums erfolgt, wobei der Druck im Mischungsraum 5 bis 500 Millibar, vorzugsweise 10 bis 100 Millibar beträgt.

Im Hinblick auf den gesamten Produktionsablauf ergeben sich Vorteile dann, wenn die unvulkanisierte Kautschukmischung in einem Vakuumextruder entgast wird, der on-Line direkt an die Fertigungslinie liefert, so daß eine Zwischenlagerung oder ein Transport, bei denen ja üblicherweise die Möglichkeit zur wiederholten Gasaufnahme durch weitere Einrichtungen verhindert werden müßte, entfallen.

Abhängig von der gewählten Vorwärmung und der Dauer der nachfolgenden Vulkanisation ergeben sich besondere Vorteile dadurch, daß die Reifen nach der im zweiten Schritt erfolgenden Vulkanisation durch eine Warmlagerung bei einer Temperatur von 60° bis 130°C, vorzugsweise bei einer Temperatur von 90° bis 110°C nachgetempert werden. Hierdurch wird es möglich, daß man die Reifen nur solange in der Vulkanisationspresse beläßt, bis eine von der Temperatur abhängige ausreichende Vernetzung stattgefunden hat und die restliche Vulkanisation nach Entnahme aus der Presse in der Warmlagerung ablaufen läßt, so daß bereits zu einem frühen Zeitpunkt die Formen neu beladen werden können.

Diese Vorteile sind ebenfalls erreichbar, wenn - wiederum abhängig von Vorwärmung und Vulkanisationstemperatur - die Reifen nach der im zweiten Schritt erfolgende Vulkanisation durch eine Verzögerung der Auskühlung nachgetempert werden. Auch hier können die Reifen schnell der Form entnommen werden und in einem Bereich gelagert werden, der durch Wärmedämmungen eine schnelle Abkühlung der Reifen verhindert, wobei die Restvulkanisation in dieser verzögernden Auskühlung stattfindet.

In einer vorteilhaften Weiterbildung werden die Kautschukmischungen warm aufgespritzt, wobei die Kautschukmischungen eine Temperatur von 80° bis 120° C aufweisen. Damit findet nicht nur durch die durch die Vorwärmung der Karkasse eingebrachte Wärmeenergie, die ja erst durch den Karkasskörper an die Unterseite des Laufstreifens transportiert werden muß, eine Beeinflussung der Anfangsvernetzung statt, sondern auch durch die im Laufstreifen selbst bereits enthaltene Wärmeenergie.

Vorteilhafterweise werden die unvulkanisierten Kautschukmischungen bei der Mischungsherstellung so eingestellt, daß deren Anfangsvernetzung (Scorch) bei 130° C nach einem Zeitraum von weniger als 5 Minuten, vorzugsweise weniger als 3 Minuten beginnt. Im Zusammenspiel mit den übrigen Verfahrensmaßnahmen ist durch eine solche Mischungseinstellung eine weitere Verkürzung der Vulkanisationszeit erreichbar.

Das erfindungsgemäße Verfahren läßt sich vorteilhaft auch für die Runderneuerung von Reifen einsetzen, wobei ein im wesentlichen durch Säubern und Aufrauhen mit Hilfe chemischer und/oder mechanischer Mittel für die Runderneuerung vorbereiteter Reifenkörper (Altkarkasse), bei dem der ursprünglich vorhandene Laufstreifen und/oder andere oberflächennahe und durch Verschleiß abgenutzte Reifenteile ersetzt werden, als Karkasskörper eingesetzt, gegebenenfalls unter Einlegen einer oder mehrerer Zwischenlagen mit unvulkanisierten Kautschukmischungen für den Laufstreifen und/oder die Seitenwand- oder Schulterbereiche belegt und anschließend vulkanisiert wird. Die Vorwärmung des Karkasskörpers erfolgt ebenfalls mit Dampf, jedoch bei einer etwas niedrigeren Temperatur als beim Neureifen. Auch hier lassen sich je nach Druck und Sättigung des Dampfes unterschiedliche Dampfzustände nutzen.

Insbesondere in Verbindung mit einer Nachtemperung, einer entsprechend eingestellten Anfangsvernetzung, und einer ausreichenden Entgasung läßt sich hier die Temperatur der Vorwärmung so steuern, daß auch bei den verwendeten Altkarkassen eine sichere Prozeßführung dahingehend erreicht wird, daß eine Schädigung der Rauhnabe durch Oberflächenoxydation, eine Verschlechterung der Bindung des Laufstreifens während der Vulkanisation und eine Schädigung der Innenseele sicher vermieden wird.

Selbstverständlich kann hierbei genauso wie bei der Herstellung von Neureifen anstelle der Erwärmung durch Dampf eine Erwärmung durch Heizluft eingesetzt werden.

Das erfindungsgemäße Verfahren eignet sich besonders zur Herstellung von in zwei voneinander getrennten Verfahrensteilen A und B hergestellten Neureifen, wobei im Verfahrensteil A ein im wesentlichen die Karkasse mit dem Gürtelverband oder die Karkasse mit dem Gürtelverband und gegebenenfalls einer Gürtelbandage sowie als radial äußerste Lage eine Laufstreifenunterplatte oder -Basislage beinhaltender Teilreifen aufgebaut und anschließend in einer Vulkanisationsform ausvulkanisiert wird, die sowohl der Oberfläche als auch dem bzw. den Festigkeitsträger(n) eine vorbestimmte Querschnittskontur vermittelt, und wobei im Verfahrensteil B der Teilreifen durch Hinzufügen des Laufstreifens bzw. des Restlaufstreifens oder der ein- oder mehrteiligen Bandage und des Laufstreifens zu einem Komplettreifen aufgebaut wird, welcher ebenfalls einem Vulkanisationsvorgang unterzogen wird.

Je nach Einsatzgebiet und nach Konstruktion des Reifens bzw. der Festigkeitsträger ergibt sich hier der Vorteil einer außerordentlich variablen Fertigung, wobei die Herstellung des Karkasskörpers unterschiedliche "Vorfertigungsstufen" beinhalten kann, die durch das Aufbringen der im zweiten Prozeßteil B zusammen mit dem Laufstreifen aufgelegten Konstruktionsteile in beliebiger Weise vervollständigt werden können, so daß eine Vereinheitlichung von Vorfertigungsteilen ermöglicht wird, ohne beliebige Diversifikationen des fertigen Reifens zu behindern.

Anhand eines Ausführungsbeispiels soll das erfindungsgemäße Verfahren näher dargestellt werden. Es zeigen:
- Fig. 1: eine halbschematische Darstellung des erfindungsgemäßen Verfahrens mit Vorfertigung, Vorwärmung und Vulkanisation.
- Fig. 2: die Vorwärmungskammer während der Vorwärmung im Seitenschnitt.

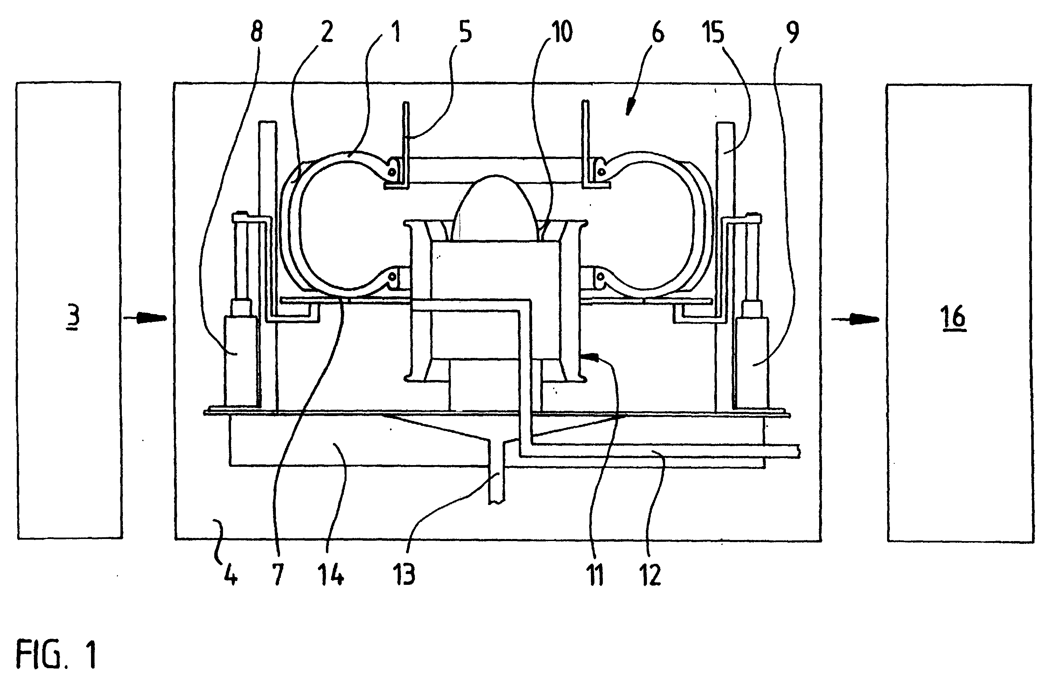

Die Figur 1 zeigt in halbschematischer Weise das erfindungsgemäße Verfahren, bei dem ein Karkasskörper 1 mit einem aus einer unvulkanisierten Kautschukmischung bestehenden Laufstreifen 2 belegt und mit diesem in einem Vorfertigungsbereich 3 zusammengestellt ist. Danach erfolgt der Transport in den Vorwärmungsbereich 4.

Der Transport erfolgt üblicherweise über einen an den Wülsten angreifenden Transportgreifer 5, der im Überkopftransport die Rohlinge in die Vorwärmkammer 6 transportiert. Als Rohling ist hierbei - wie bereits oben geschildert - der vulkanisierte Karkasskörper mit der aufgelegten unvulkanisierten Kautschukmischung des Laufstreifens anzusehen. In der Vorwärmkammer 6 wird der Rohling auf einem Auflageteller 7 abgelegt, der über die Hydraulikzylinder 8 und 9 verfahrbar ist. Zentrisch innerhalb der Vorwärmkammer 6 ist eine Spannfelge 10 angeordnet, welche hier im einzelnen nicht dargestellte über ihren Umfang verteilte Spannsegmente beinhaltet, die von einem ringförmigen, flexiblen Dichtprofil 11 umgeben sind. Innerhalb der Spannfelge bzw. der Vorwärmkammer sind eine Zufuhrleitung 12 für das Wärmemedium und eine Kondensatabfuhrleitung 13 vorgesehen. Die Wärmekammer 6 wird durch den Boden 14 und die in diesem Fall als Zylinder ausgebildete Wandung 15 begrenzt.

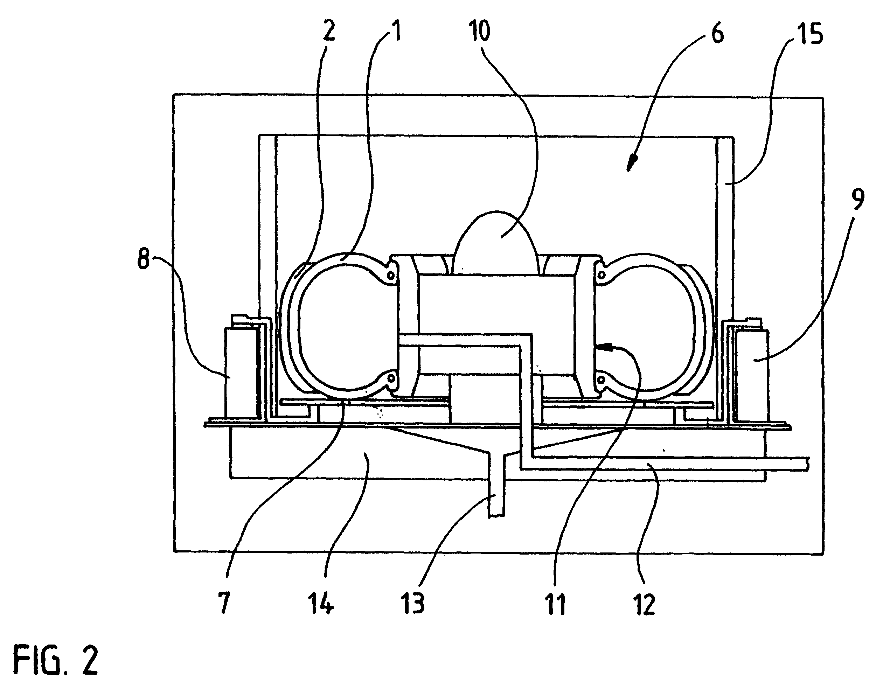

Nachdem der Greifer zurückgefahren ist, wird die Auflageteller 7 mit dem Rohling abgesenkt und der Rohling selbst von der Spannfelge festgespannt wie dies in der Figur 2 zu sehen ist. Danach wird über die Mediumsleitung 12 der Rohling von innen her erwärmt, wobei hier eine Direkterwärmung ohne die Nutzung eines innen eingelegten Balges vorgesehen ist.

Sobald die vorbestimmte Vorwärmtemperatur erreicht ist, wird die Spannfelge entspannt, wonach das Wärmemedium auslaufen kann und über die Kondensatleitung 13 abgeführt wird. Der Rohling wird dann wieder mit dem Greifer abgehoben und in die Vulkanisation 16 transportiert.

### Bezugszeichenliste

- 1: Karkasskörper
- 2: unvulkanisierte Kautschukmischung
- 3: Vorfertigungsbereich
- 4: Vorwärmungsbereich
- 5: Transportgreifer
- 6: Vorwärmkammer
- 7: Auflageteller
- 8, 9: Hydraulikzylinder
- 10: Spannfelge
- 11: Dichtprofil
- 12: Zufuhrleitung für Wärmemedium
- 13: Kondensatabfuhrleitung
- 14: Boden
- 15: Wandung
- 16: Vulkanisation

## Patentansprüche

1. Verfahren zur Herstellung von Luftreifen, welche im wesentlichen Karkasskörper, Seitenwände, Verstärkungselemente, mit Wulstkernen versehene Reifenwülste und einen Laufstreifen aufweisen, bei dem ein bereits vulkanisierter und mindestens die Gürtellagen enthaltender Karkasskörper vorgewärmt, mit unvulkanisierten Kautschukmischungen für den Laufstreifen und / oder die Seitenwand- oder Schulterbereiche belegt, und anschließend vulkanisiert wird
**dadurch gekennzeichnet,**
**daß** in einem ersten Schritt die Vorwärmung des mit unvulkanisierten Kautschukmischungen belegten Karkasskörpers ohne Formgebung und von der Innenseite des Karkasskörpers so erfolgt, daß die Grenzfläche zwischen Karkasskörper und aufgelegten Kautschukmischungen bis auf eine Temperatur erwärmt wird, bei der die unvulkanisierte Kautschukmischung noch nicht vulkanisationsaktiv wird, und danach in einem zweiten Schritt der vorgewärmte Karkasskörper mit den aufgelegten Kautschukmischungen in eine das Außenprofil und gegebenenfalls die Seitenwände des Reifens formende Vulkanisationsform eingebracht, ausgeformt und vulkanisiert wird.

2. Verfahren nach Anspruch 1, **dadurch gekennzeichnet, daß** die Vorwärmung mit Dampf einer Temperatur von 100° 170° C erfolgt.

3. Verfahren nach Anspruch 1 oder 2, **dadurch gekennzeichnet, daß** die unvulkanisierten Kautschukmischungen entgast werden.

4. Verfahren nach Anspruch 3, **dadurch gekennzeichnet, daß** die unvulkanisierten Kautschukmischungen bei der Mischungsherstellung in einem unterfüllten stempellosen Kneter bei einer Temperatur von 100° bis 150° C entgast werden.

5. Verfahren nach Anspruch 3 oder 4, **dadurch gekennzeichnet, daß** die unvulkanisierten Kautschukmischungen bei der Mischungsherstellung in einem unterfüllten stempellosen Kneter unter Anwendung eines Vakuums entgast werden, wobei der Druck im Mischungsraum 5 bis 500 Millibar, vorzugsweise 10 bis 100 Millibar beträgt.

6. Verfahren nach Anspruch 1 oder 2, **dadurch gekennzeichnet, daß** die unvulkanisierten Kautschukmischungen on-line in einem Vakuumextruder entgast werden.

7. Verfahren nach Anspruch 1 bis 6, **dadurch gekennzeichnet, daß** die Reifen nach der im zweiten Schritt erfolgten Vulkanisation durch eine Warmlagerung bei einer Temperatur von 60° bis 130° C, vorzugsweise bei einer Temperatur von 90° bis 110° C nachgetempert werden.

8. Verfahren nach Anspruch 1 bis 6, **dadurch gekennzeichnet, daß** die Reifen nach der im zweiten Schritt erfolgten Vulkanisation durch eine Verzögerung der Auskühlung nachgetempert werden.

9. Verfahren nach Anspruch 1 bis 8, **dadurch gekennzeichnet, daß** die Kautschukmischungen aufgespritzt werden, wobei das Aufspritzen bei einer Temperatur der Kautschukmischungen von 80° bis 120° C erfolgt.

10. Verfahren nach einem der Ansprüche 1 bis 9, **dadurch gekennzeichnet, daß** die unvulkanisierten Kautschukmischungen bei der Mischungsherstellung so eingestellt werden, daß deren Anfangsvernetzung (Scorch) bei 130° C nach einem Zeitraum von weniger als 5 Minuten, vorzugsweise weniger als 3 Minuten beginnt.

11. Verfahren nach einem oder mehreren der Ansprüche 1 bis 10, **dadurch gekennzeichnet, daß** ein im wesentlichen durch Säubern und/oder Aufrauhen mit Hilfe chemischer und / oder mechanischer Mittel für die Runderneuerung vorbereiteter Reifenkörper, bei dem der ursprünglich vorhandene Laufstreifen und / oder andere oberflächennahe und durch Verschleiß abgenutzte Reifenteile ersetzt werden, als Karkasskörper eingesetzt, gegebenenfalls unter Einlegen einer oder mehrerer Zwischenlagen mit unvulkanisierten Kautschukmischungen für den Laufstreifen und / oder die Seitenwand- oder Schulterbereiche belegt und anschließend vulkanisiert wird.

12. Verwendung des Verfahrens nach einem der Ansprüche 1 bis 10 zur Herstellung von in zwei voneinander getrennten Verfahrensteilen A und B hergestellten Neureifen, wobei im Verfahrensteil A ein im wesentlichen die Karkasse mit dem Gürtelverband oder die Karkasse mit dem Gürtelverband und gegebenenfalls eine Gürtelbandage sowie als radial äußerste Lage eine Laufstreifenunterplatte oder -basislage beinhaltender Teilreifen aufgebaut und anschließend in einer Vulkanisationsform ausvulkanisiert wird, die sowohl der Oberfläche als auch dem bzw. den Festigkeitsträger(n) eine vorbestimmte Querschnittskontur vermittelt, und wobei im Verfahrensteil B der Teilreifen durch Hinzufügen des Laufstreifens bzw. des Restlaufstreifens oder der ein- oder mehrteiligen Bandage und des Laufstreifens zu einem Komplettreifen aufgebaut wird, welcher ebenfalls einem Vulkanisationsvorgang unterzogen wird.

## Claims

1. Method of producing pneumatic tyres which substantially include carcase bodies, sidewalls, reinforcing members, tyre beads which are provided with bead cores, and a tread strip, wherein a carcase body, which has already been vulcanised and contains at least the belt plies, is preheated, covered with unvulcanised rubber mixtures for the tread strip and/or the sidewall or shoulder regions, and subsequently vulcanised, **characterised in that**, in a first step, the preheating of the carcase body, which is covered with unvulcanised rubber mixtures, is effected without form-shaping and from the inside of the carcase body in such a manner that the interface between carcase body and applied rubber mixtures is heated to a temperature at which the unvulcanised rubber mixture does not yet become vulcanisation-active, and then, in a second step, the preheated carcase body, with the applied rubber mixtures, is introduced into a vulcanisation mould, which shapes the external profile and possibly the sidewalls of the tyre, removed from the mould and vulcanised.

2. Method according to claim 1, **characterised in that** the preheating is effected with steam having a temperature of 100° - 170° C.

3. Method according to claim 1 or 2, **characterised in that** the unvulcanised rubber mixtures are degassed.

4. Method according to claim 3, **characterised in that** the unvulcanised rubber mixtures are degassed at a temperature of 100° to 150° C when the mixtures are produced in an underfilled ramless masticator.

5. Method according to claim 3 or 4, **characterised in that** the unvulcanised rubber mixtures are degassed by using a vacuum when the mixtures are produced in an underfilled ramless masticator, the pressure in the mixing chamber being 5 to 500 millibars, preferably 10 to 100 millibars.

6. Method according to claim 1 or 2, **characterised in that** the unvulcanised rubber mixtures are degassed on-line in a vacuum extruder.

7. Method according to claims 1 to 6, **characterised in that**, after the vulcanisation has been effected in the second step, the tyres are subsequently tempered by warm storage at a temperature of 60° to 130° C, preferably at a temperature of 90° to 110° C.

8. Method according to claims 1 to 6, **characterised in that**, after the vulcanisation has been effected in the second step, the tyres are subsequently tempered by a delay in the cooling.

9. Method according to claims 1 to 8, **characterised in that** the rubber mixtures are sprayed-on, the spraying-on process being effected when the rubber mixtures have a temperature of 80° to 120° C.

10. Method according to one of claims 1 to 9, **characterised in that** the unvulcanised rubber mixtures are so set during the mixture production that their initial cross-linking (scorching) begins at 130° C after a period of less than 5 minutes, preferably less than 3 minutes.

11. Method according to one or more of claims 1 to 10, **characterised in that** a tyre body, which has been substantially prepared by cleaning and/or roughening-up by means of chemical agents and/or mechanical means for the retreading, and wherein the originally existing tread strip and/or other tyre parts which are close to the surface and worn-down by wear, are replaced, is used as the carcase body, covered with unvulcanised rubber mixtures for the tread strip and/or the side wall or shoulder regions, possibly by the insertion of one or more intermediate plies, and subsequently vulcanised.

12. Use of the method according to one of claims 1 to 10 to produce new tyres produced in two method parts A and B which are separated from each other, wherein, in method part A, a partial tyre is constructed, which substantially contains the carcase with the belt binding or the carcase with the belt binding and possibly a belt bandage as well as a tread strip sub-structure or base ply as the radially outermost ply, and it is subsequently vulcanised in a vulcanisation mould, which imparts a predetermined cross-sectional contour both to the surface and to the reinforcing member or members, and wherein, in method part B, the partial tyre is constructed to form a complete tyre by the addition of the tread strip or the remaining tread strip or the single-part or multiple-part bandage and the tread strip, which complete tyre is also subjected to a vulcanisation process.

## Revendications

1. Procédé de fabrication de pneus, présentant essentiellement des corps de carcasse, des parois latérales, des éléments de renforcement, des bourrelets de pneus munis de noyaux de bourrelet, et une bande de roulement, dans lequel un corps de carcasse, déjà vulcanisé et contenant au moins les couches de ceinture, est préchauffé, garni de mélanges de caoutchouc non vulcanisés pour la bande de roulement et/ou les zones de parois latérales ou les zones d'épaulement, et est ensuite vulcanisé, **caractérisé en ce que**, lors d'une première étape, le préchauffage du corps de carcasse garni de mélanges de caoutchouc non vulcanisés se fait sans formage et depuis la face intérieure du corps de carcasse, **en ce que** la face limite, entre le corps de carcasse et les mélanges de caoutchouc appliqués, est chauffée jusqu'à une température pour laquelle le mélange de caoutchouc non vulcanisé n'est pas encore actif pour la vulcanisation et, ensuite, lors d'une deuxième étape, le corps de carcasse préchauffé avec les mélanges de caoutchouc appliqués est introduit dans un moule de vulcanisation, formant le profil extérieur et, le cas échéant, les parois latérales du pneu, est formé tridimensionnellement et vulcanisé.

2. Procédé selon la revendication 1, **caractérisé en ce que** le préchauffage est effectué avec de la vapeur d'une température de 100° à 170°C.

3. Procédé selon la revendication 1 ou 2, **caractérisé en ce que** les mélanges de caoutchouc non vulcanisés sont dégazés.

4. Procédé selon la revendication 3, **caractérisé en ce que** les mélanges de caoutchouc non vulcanisés sont dégazés lors de la fabrication du mélange, dans un pétrisseur sans poinçon, en état de sous-remplissage, à une température de 100° à 150°C.

5. Procédé selon la revendication 3 ou 4, **caractérisé en ce que** les mélanges de caoutchouc non vulcanisés, lors de la fabrication du mélange dans un pétrisseur sans poinçon, en état de sous-remplissage, sont dégazés par application d'un vide, la pression dans l'enceinte de mélange étant de 5 à 500 millibars, de préférence de 10 à 100 millibars.

6. Procédé selon la revendication 1 ou 2, **caractérisé en ce que** les mélanges de caoutchouc non vulcanisés sont dégazés en ligne, dans une extrudeuse travaillant sous vide.

7. Procédé selon la revendication 1 à 6, **caractérisé en ce que** les pneus, après la vulcanisation effectuée lors d'une deuxième étape, sont soumis à un post-recuit par stockage à chaud à une température de 60° à 130°C, de préférence à une température de 90° à 110°C.

8. Procédé selon la revendication 1 à 6, **caractérisé en ce que** les pneus sont soumis à un post-recuit, après la vulcanisation effectuée à la deuxième étape, en procédant à un ralentissement du refroidissement.

9. Procédé selon la revendication 1 à 8, **caractérisé en ce que** les mélanges de caoutchouc sont injectés en enrobage, l'enrobage par injection se faisant à une température de mélanges de caoutchouc de 80° à 120°C.

10. Procédé selon l'une des revendications 1 à 9, **caractérisé en ce que** les mélanges de caoutchouc non vulcanisés sont réglés, lors de la fabrication du mélange, de manière que leur réticulation initiale (Scorch) commence à 130°C après une durée inférieure à 5 minutes, de préférence inférieure à 3 minutes.

11. Procédé selon une ou plusieurs des revendications 1 à 10, **caractérisé en ce qu'**un corps de pneu, préparé essentiellement par un nettoyage et/ou un traitement d'augmentation de la rugosité effectué à l'aide d'agents chimiques et/ou mécaniques, pour la remise à l'état concentrique, lors duquel la bande de roulement initiale et/ou d'autres parties du pneu proches de la surface et ayant été rongées par l'usure sont remplacées, est utilisé en tant que corps de carcasse, le cas échéant en insérant une ou plusieurs couches intermédiaires, est garni de mélanges de caoutchouc non vulcanisés pour la bande de roulement et/ou les zones de parois latérales ou d'épaulement, et est ensuite vulcanisé.

12. Utilisation du procédé selon l'une des revendications 1 à 10 pour la fabrication de pneus neufs fabriqués en deux parties de procédé, A et B, séparées l'une de l'autre, sachant que, dans la partie de procédé A, on construit un pneu partiel, contenant essentiellement la carcasse avec le composite de ceinture ou la carcasse avec le composite de ceinture et, le cas échéant, un bandage de ceinture, ainsi que, sous forme de couche radialement la plus extérieure, une plaque inférieure de bande de roulement ou une couche de base de bande de roulement, et, ensuite, on procède à une vulcanisation dans un moule de vulcanisation, qui confère un contour de section transversale prédéterminée, tant à la surface, qu'également aux un ou plusieurs supports de résistance, et où, à l'étape de procédé B, le pneu partiel est construit par insertion de la bande de roulement ou de la bande de roulement résiduelle ou du bandage formé en une ou plusieurs parties et de la bande de roulement, pour obtenir un pneu complet, qui est également soumis à un processus de vulcanisation.
